(19) Europäisches Patentamt
European Patent Office
Office européen des brevets

(11) **EP 4 715 733 A1**

(12) **EUROPEAN PATENT APPLICATION**
published in accordance with Art. 153(4) EPC

(43) Date of publication:
**25.03.2026   Bulletin 2026/13**

(21) Application number: **24810665.0**

(22) Date of filing: **06.03.2024**

(51) International Patent Classification (IPC):
*G06T 7/00* (2017.01)       *G06Q 30/06* (2023.01)

(52) Cooperative Patent Classification (CPC):
**G06Q 30/06; G06T 7/00**

(86) International application number:
**PCT/JP2024/008612**

(87) International publication number:
**WO 2024/241657 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **19.05.2023   JP 2023083471**

(71) Applicant: **Marketvision Co.,Ltd.**
**Tokyo 102-0075 (JP)**

(72) Inventor: **SHIN Dongjoo**
**Tokyo 102-0075 (JP)**

(74) Representative: **Betten & Resch**
**Patent- und Rechtsanwälte PartGmbB**
**Maximiliansplatz 14**
**80333 München (DE)**

(54) **INFORMATION PROCESSING SYSTEM**

(57)     An object is to provide an information processing system that detects an area of a display shelf to be processed in processing of identifying goods displayed on the display shelf/reading price tags.

The information processing system includes a learning processing unit that generates a network of machine learning, and a detection processing unit that performs processing of detecting a predetermined area from image information using the network, the learning processing unit including an annotation data reception processing unit that receives an input of annotation data obtained by annotating a goods display area and/or a price tag area in the display shelf, and a learning processing unit that performs learning processing using the received annotation data and generates a network of machine learning, and the detection processing unit including an image information reception processing unit that receives an input of image information in which a display shelf to be processed is captured, and a recognition processing unit that recognizes the goods display area and/or the price tag area in the display shelf captured in the image information using the generated network.

Fig.1

EP 4 715 733 A1

## Description

Technical Field

The present disclosure relates to an information processing system that detects an area of a display shelf to be processed in processing of identifying goods displayed on the display shelf/reading price tags.

Cross-Reference to Related Applications

This application claims the benefit of priority based on Patent Application No. 2023-083471 filed on May 19, 2023. The entire contents of that patent application are then incorporated herein by reference.

Background Art

In various stores such as a convenience store and a supermarket, goods on sale are generally placed on display shelves and sold. Thus, by displaying a plurality of goods on the display shelf, even if one of the goods is purchased, another person can purchase the same goods. This also creates a competitive advantage and disadvantage relationship, in which goods arranged in large quantities at prominent positions attract attention and outsell other products. Therefore, it is important in terms of goods sales strategy to manage where and how many goods are displayed on the display shelf and the prices of the goods.

Thus, the display shelf is captured using an imaging device such as a camera and objects captured in the image information are automatically recognized to grasp the display positions and the number of goods and the prices of the displayed goods or the prices described in price tags (price cards). Accordingly, there are techniques disclosed in Patent Literature 1 and Patent Literature 2 below.

Citation List

Patent Literature

Patent Literature 1: JP 5-334409 A
Patent Literature 2: JP 5-342230 A

Summary of Invention

In many stores, goods are displayed in units of display shelves with goods types aligned. Thus, when identification processing of goods displayed on the display shelf and reading processing of price tags are performed, it is reasonable to perform the identification processing and reading processing in units of display shelves.

In a case where the goods displayed on the display shelf are captured by the imaging device, capturing is performed so that the left and right ends of one display shelf are within the angle of view, but if the right and left ends are to be exactly within the angle of view, it takes time to adjust the imaging angle when capturing the display shelf by the imaging device. Thus, in practice, capturing is generally performed with a margin on the left and right of the angle of view.

Since capturing is performed with a margin on the left and right of the angle of view, in addition to the display shelf to be originally captured, another display shelf located on the left and/or right of the display shelf and goods displayed there are also included in the captured image information. Therefore, when identification processing of goods displayed in units of display shelves and reading processing of price tags are to be performed, it is required to exclude left and right adjacent display shelves other than the display shelf as the original processing target and the goods displayed thereon from the processing target.

However, in the prior art including the above-described respective patent documents, it has not been possible to accurately exclude the display shelves on the left and right sides and the goods displayed therein from the processing target. In some cases, a human manually sets an area to be processed from a captured image.

Therefore, in view of the above problems, an information processing system that detects an area of a display shelf to be processed in processing of identifying goods displayed on the display shelf/reading price tags is disclosed.

An information processing system according to one aspect of the present disclosure is an information processing system for image information for capturing a display shelf, in which the information processing system includes a learning processing unit that generates a network of machine learning, and a detection processing unit that performs processing of detecting a predetermined area from the image information using the network, the learning processing unit including an annotation data reception processing unit that receives an input of annotation data obtained by annotating a goods display area and/or a price tag area in the display shelf, and a learning processing unit that performs learning processing using the received annotation data and generates a network of machine learning, and the detection processing unit including an image information reception processing unit that receives an input of image information in which a display shelf to be processed is captured, and a recognition processing unit that recognizes the goods display area and/or the price tag area in the display shelf captured in the image information using the generated network.

By using the above, it is possible to detect an area of the display shelf to be processed in processing of identifying goods displayed on the display shelf/reading price tags.

In the information processing system according to the aspect described above, the detection processing unit may include a correction processing unit that executes correction processing of correcting a position of an end of the recognized goods display area and/or price tag area in a case where the position of the end is shifted.

In many cases, the goods display area and/or the price tag area can be recognized, but the accuracy is not 100%. Thus, it is preferable to provide correction processing as in the present disclosure.

In the information processing system according to the aspect described above, the correction processing unit may be configured to detect an abnormal value at an end of the detected goods display area and/or price tag area, and change an area having the abnormal value to a normally recognized position of the end.

In the information processing system according to one aspect described above, the correction processing unit may be configured to determine a position of an end of the detected goods display area and/or price tag area, and determine an end shifted by a predetermined magnitude or a predetermined ratio or more from an average value or a median value of the positions as an abnormal value.

In the information processing system of one aspect described above, the correction processing unit may be configured to detect an object near an end of the display shelf, and determine an end of the detected goods display area and/or the price tag area as a position of the detected object.

The correction process can be performed as in these disclosures.

In the information processing system according to the aspect described above, the detection processing unit may be configured to include a correct placement processing unit that executes correct placement processing of deforming the image information in which the display shelf to be processed is captured and for which an input has been received is captured so as to be in a facing position, and the recognition processing unit recognizes an area to be processed by using the generated network, with image information after execution of the correct placement processing as input image information.

In a case of capturing a display shelf of a store, a distance between the display shelf to be captured and the imaging device may not be secured. In addition, there are many cases where capturing is performed at an elevation angle or a depression angle, and capturing cannot be performed from a facing position in many cases. Processing such image information as it is leads to erroneous recognition. Thus, it is preferable to correct the image information captured by the correct placement processing unit so as to be the facing position as if the image information was captured from the facing position.

In the information processing system according to the aspect described above, the correct placement processing unit may be configured to include a sensor information input reception processing unit that receives an input of information of a pitch angle and a roll angle of an imaging device or an information processing terminal that has captured the display shelf and distance information obtained by measuring a distance to an imaging target object, and an image deformation processing unit that performs image deformation processing on the image information, and the image deformation processing unit calculates a regression line of a point cloud including a plurality of the points by using the distance information and the information of the pitch angle and the roll angle, estimates information of a yaw angle of the imaging device or the information processing terminal, and deforms the image information to be a position facing the imaging device by using the estimated information of the yaw angle.

In the information processing system according to the aspect described above, the image deformation processing unit may be configured to convert distance information to an arbitrary point in the imaging target object into three-dimensional information, rotate the point cloud including the points on a basis of information of a pitch angle and a roll angle, and estimate the information of the yaw angle by calculating a regression line of a point cloud when the point cloud including the points is projected on a horizontal plane.

With the configuration as described in these disclosures, it is possible to perform correction processing with a small processing load. Thus, even a portable communication terminal with low capability such as a smartphone can perform correction processing.

An information processing system according to one aspect of the present disclosure is an information processing system for image information for capturing a display shelf, the information processing system includes an image information reception processing unit that receives an input of image information in which a display shelf to be processed is captured, and a recognition processing unit that recognizes a goods display area and/or a price tag area in the display shelf captured in the image information using a network of machine learning generated using annotation data obtained by annotating the goods display area and/or the price tag area captured in the display shelf.

Similar technical effects can be obtained even if the configuration is configured as in the present disclosure.

The information processing system disclosed above can be implemented by causing a computer to read and execute an information processing program according to one aspect of the present disclosure. That is, the information processing program may be configured to cause a computer to function as a learning processing unit that generates a network of machine learning, and a detection processing unit that performs processing of detecting a predetermined area from image information using the network, in which the learning processing unit causes the computer to function as an annotation data reception processing unit that receives an input of annotation data obtained by annotating a goods display area and/or a price tag area in a display shelf, and a learning processing unit that performs learning processing using the received annotation data and generates a network of machine learning, and the detection processing unit causes the computer to function as an image information reception processing unit that receives an input of image information in which a display shelf to be processed is captured, and a recognition processing unit that recognizes the goods display area and/or the price tag area in the display shelf captured in the image information using the generated network.

The information processing system disclosed above can be implemented by causing a computer to read and execute an information processing program according to one aspect of the present disclosure. That is, the information processing program may be configured to cause a computer to function as an image information reception processing unit that receives an input of image information in which a display shelf to be processed is captured, and a recognition processing unit that recognizes a goods display area and/or a price tag area in the display shelf captured in the image information using a network of machine learning generated using annotation data obtained by annotating the goods display area and/or the price tag area captured in the display shelf.

Advantageous Effects of Invention

By using an information processing system of the present disclosure, it is possible to detect an area of a display shelf to be processed in processing of identifying goods displayed on the display shelf/reading price tags.

Brief Description of Drawings

Fig. 1 is a block diagram schematically illustrating an example of a configuration of an information processing system of the present disclosure.
Fig. 2 is a block diagram schematically illustrating an example of a hardware configuration of a computer used in the information processing system of the present disclosure.
Fig. 3 is a flowchart illustrating an example of learning processing in the information processing system of the present disclosure.
Fig. 4 is a flowchart illustrating an example of detection processing in the information processing system of the present disclosure.
Fig. 5 is a view illustrating an example of a case where a pillar member is used as an object of a display shelf.
Fig. 6 is a view illustrating an example of a case of a break as an object of the display shelf.
Fig. 7 is a view illustrating an example of image information after execution of correct placement processing.
Fig. 8 is a view illustrating an example of a recognition result.
Fig. 9 is a view illustrating an example of image information in which only a goods display area is output as a recognition result.
Fig. 10 is a view illustrating an example of image information in which only a price tag area is output as a recognition result.
Fig. 11 is a view illustrating an example of image information after correction processing on a recognition result.
Fig. 12 is a view illustrating an example of image information after correction processing on a recognition result.
Fig. 13 is a block diagram schematically illustrating an example of a configuration of a correct placement processing unit in Example 2.
Fig. 14 is a flowchart illustrating an example of a process of correct placement processing in Example 2.
Fig. 15 is a view illustrating an example of image information before correction captured by the imaging device.
Fig. 16 is a view schematically illustrating a relationship between a target surface and a three-dimensional space.
Fig. 17 is an example of corrected image information.
Fig. 18 is a front view in a state in which a point cloud after rotation is mapped on a vertical plane.
Fig. 19 is a top view in a state in which a point cloud after rotation is mapped on a horizontal plane.
Fig. 20 is a diagram schematically illustrating processing in an angle estimation processing unit.
Fig. 21 is a diagram schematically illustrating processing in an image deformation processing unit.
Fig. 22 is a diagram illustrating a shift in distance information in a case where an imaging target object having a large amount of irregularities is captured.
Fig. 23 is a diagram schematically illustrating random selection of a point cloud from a matrix among point clouds on which distance information is plotted.
Fig. 24 is a diagram schematically illustrating image information in a case where irregularities are reflected on the left and right of an original imaging target and an abnormal value of distance information due to the image information.
Fig. 25 is a diagram schematically illustrating an example of a modification of the correct placement processing in Example 2.

Description of Embodiments

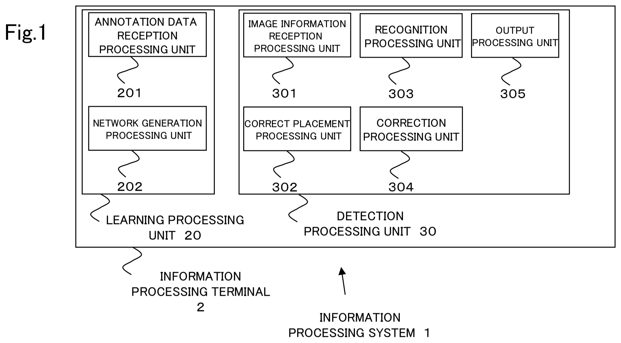

Fig. 1 illustrates a block diagram of an example of an entire processing function of an information processing system 1 according to an aspect of the present disclosure. The information processing system 1 functions in an information processing terminal 2. The information processing terminal 2 may be a portable communication terminal such as a smartphone or a tablet computer, a laptop computer, a desktop computer, or various computers such as a server. The information processing terminal 2 may have any appearance, name, or the like as long as the information processing terminal 2 has a function necessary for processing of the information processing system 1 according to one aspect of the present disclosure.

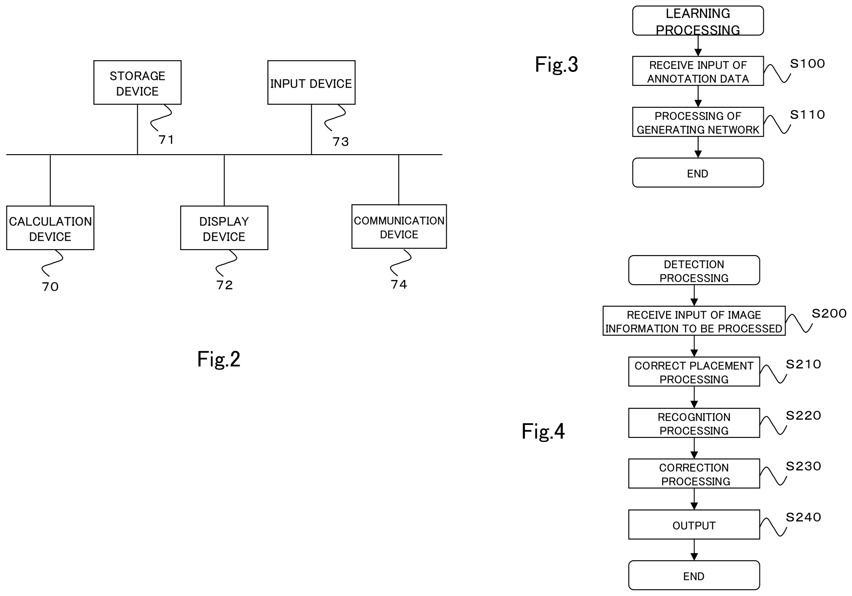

Fig. 2 schematically illustrates an example of a hardware configuration of the information processing terminal 2 in the information processing system 1. The information processing terminal 2 includes a calculation device 70 such as a CPU that executes calculation processing of a program, a storage device 71 such as a RAM or a hard disk that stores information, a display device 72 such as a display that displays information, an input device 73 that can input information, and a communication device 74 that transmits and receives a processing result of the calculation device 70 and information stored in the storage device 71 via a network such as the Internet or a LAN.

In a case where the information processing terminal 2 includes a touch panel display, the display device 72 and the input device 73 may be integrally configured. The touch panel display is often used in the information processing terminal 2 such as a tablet computer or a smartphone, but is not limited thereto.

The touch panel display is a device in which the functions of the display device 72 and the input device 73 are integrated in that an input can be directly performed by a predetermined input device (such as a pen for a touch panel), a finger, or the like on the display.

The functions of each unit in the present disclosure are only logically distinguished, and may be physically or practically the same area. The processing order of the processing in each unit of the present disclosure can be appropriately changed. A part of the processing may be omitted.

The information processing system 1 does not need to execute the processing in one information processing terminal 2, and the functions may be executed in a distributed manner in a plurality of information processing terminals 2. For example, processing of the learning processing unit 20 and processing of the detection processing unit 21 to be described later may be executed by different information processing terminals 2. Either or both may be executed on the cloud server.

The information processing terminal 2 includes a learning processing unit 20 and a detection processing unit 21.

The learning processing unit 20 receives an input of image information in which the display shelf is captured and executes processing of learning a network (learning model) for detecting an area of the display shelf to be processed in processing of identifying goods displayed on the display shelf/reading price tags. That is, the learning processing unit 20 generates a network (learning model) for executing processing of detecting an area to be processed from the display shelf captured in the image information by using deep learning such as machine learning for the image information in the detection processing unit 21 to be described later.

The learning processing unit 20 includes an annotation data reception processing unit 201 and a network generation processing unit 202.

The annotation data reception processing unit 201 receives an input of annotation data to be used for network learning. Examples of the annotation data include image information in which a display shelf displayed in a store is captured, and image information in which elements constituting the display shelf, for example, a goods display area, a price tag (price card) area, and the like are set as annotations in the display shelf. With respect to the goods display area, the price tag area, and the like in the annotation data, it is preferable that image information in which the entirety thereof is captured is used as the annotation data, and the positions of the left and right ends of the goods display area and the price tag area are set as accurately as possible. The annotation in the annotation data is not limited to the above description, and any element constituting the display shelf can be set as the annotation.

The goods display area and the price tag area to be set as the annotation can be set by any method such as rectangular coordinates of four points constituting the area, coordinates of two points of upper left and lower right, and upper right and lower left, and coordinates of one point and lengths in the x direction and the y direction from the point. In the image information as the annotation data, the area of the annotation is preferably set to image information subjected to processing such as trapezoid correction processing so as to be image information captured from a facing position.

The network generation processing unit 202 executes learning processing of deep learning by a known learning method in deep learning using the annotation data for which an input has been received by the annotation data reception processing unit 201, and generates a network (learning model). Recognition of the network generated by the network generation processing unit 202 by the recognition processing unit 303 in the detection processing unit 21 described later is executed.

Using the network generated by the learning processing unit 20, the detection processing unit 21 detects, from image information to be processed, an area to be processed in processing of identifying goods displayed on the display shelf/reading price tags. The detection processing unit 21 includes an image information reception processing unit 301, a correct placement processing unit 302, a recognition processing unit 303, a correction processing unit 304, and an output processing unit 305.

The image information reception processing unit 301 receives an input of the image information to be processed. The image information at this time may be one piece of image information in which the entire display shelf is captured, or may be image information in which the display shelf is captured with a plurality of pieces of image information, and the pieces of captured image information are connected to one piece of image information to obtain the entire display shelf. Furthermore, the image information may be image information in which a part of the display shelf is captured.

The correct placement processing unit 302 performs correction processing (correct placement processing) on the image information to be processed that has been received by the image information reception processing unit 301 so that the image information is at the facing position. The correct placement processing unit 302 may perform any processing as long as the processing can correct the image information to be the facing position. For example, known trapezoid correction processing may be used.

In a case of capturing a display shelf of a store, there is a case where it is difficult to secure a distance between the display shelf to be captured and the imaging device because another display shelf is located behind the capturing person and the passage is narrow. In addition, since the display shelf is positioned above or below the line of sight of the capturing person, capturing is often performed at an elevation angle or a depression angle. Thus, in many cases, the image cannot be captured from the facing position. The image information captured by the correct placement processing unit 302 is corrected to be the facing position as if the image information was captured from the facing position.

Note that the correct placement processing unit 302 may generate image information obtained by performing correct placement processing on image information to be processed, or may output a parameter (correction parameter) for deforming the image information so as to be at a position facing the image information. For example, a parameter (parameter used for projective transformation (correction parameter)) for generating image information subjected to correct placement may be output so that the image information is projectively transformed to have a facing position.

If the image information received by the image information reception processing unit 301 is image information captured from the facing position, the processing of the correct placement processing unit 302 need not be performed.

The recognition processing unit 303 recognizes an area in which processing of identifying goods displayed on the display shelf/reading price tags is performed, from image information to be processed, which has been subjected to the correct placement by the correct placement processing unit 302. As the recognition processing, it is possible to execute processing of recognizing each of the above-described areas using deep learning on the image information to be processed, which has been subjected to the correct placement by the correct placement processing unit 302. In this case, the image information subjected to the correct placement by the correct placement processing unit 302 is input to a network (learning model) in which weighting coefficients between neurons of respective layers of a neural network in which an intermediate layer is formed of a large number of layers are optimized, and an area is recognized in which processing of identifying goods/reading price tags from a display shelf captured in the image information is performed. As the network (learning model), a network generated by the learning processing unit 20 can be used.

In a case where the left and right ends of the area where the processing of identifying goods/reading price tags from a display shelf recognized by the recognition processing unit 303 is performed are shifted, the correction processing unit 304 executes a process of correcting the position.

As the correction processing unit 304, for example, the following processing can be used.

The first correction processing is a method of detecting an abnormal value at the left and right ends of the area and aligning the area having the abnormal value with the positions of the left and right ends of the other areas. That is, a large number of areas recognized by the recognition processing unit 303 are correctly detected. Therefore, when the positions of the left and right ends of the recognized area are determined and it is determined that there is an abnormal value (for example, the positions of the left and right ends deviated from the average value and the median value of the recognized area by a predetermined magnitude and a predetermined ratio or more), the positions of the left and right ends of the area having the abnormal value are changed to an average value, a median value, or the like of other recognized areas.

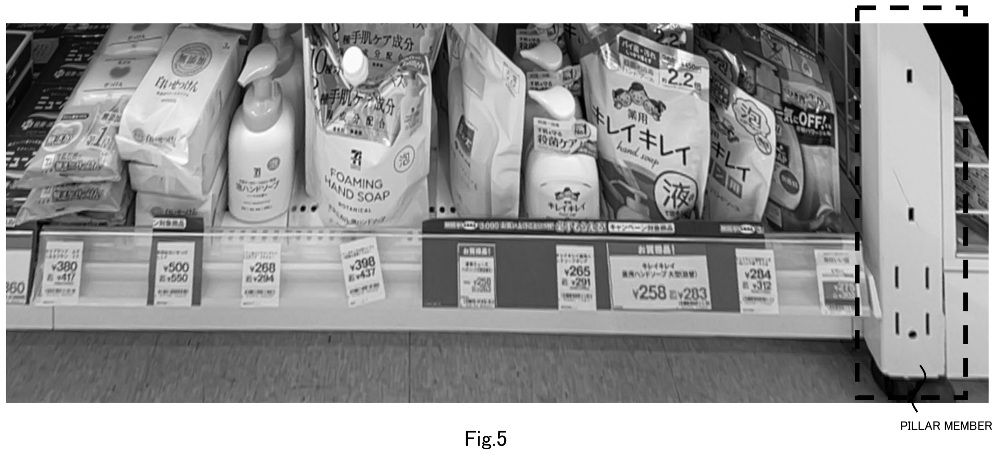

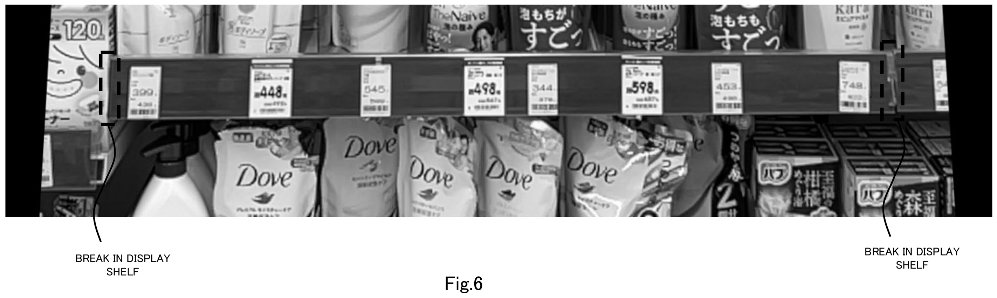

The second correction processing is a method of detecting an object near an end of the display shelf. That is, in the vicinity of the end of the display shelf, various objects such as a pillar material of the display shelf, a banner-like display for guiding goods, a break of the display shelf, and a support member for supporting goods may be attached. An example of the object is illustrated in Figs. 5 and 6. Fig. 5 illustrates a case where the object is a pillar member, and Fig. 6 illustrates a case where the object is a break in the display shelf. This is a method of causing the learning processing unit 20 to learn these objects as annotation data and detecting them.

Since the left and right ends of the display shelf are common to each shelf, the positions of the left and right ends of the area recognized by the recognition processing unit 303 can be corrected by setting the left and right ends of the area recognized by the recognition processing unit 303 as the positions of the objects by detecting the objects at the left and right ends. For example, by calculating an average value or a median value of the positions of the left and right ends of the area recognized by the recognition processing unit 303 and the position of the recognized object, the positions of the left and right ends of the area recognized by the recognition processing unit 303 are corrected.

The output processing unit 305 outputs the area recognized by the recognition processing unit 303 or the area subjected to the correction processing by the correction processing unit 304 as a detection result.

Example 1

Next, an example of processing using the information processing system 1 of the present disclosure will be described with reference to flowcharts of Figs. 3 and 4.

First, learning processing will be described with reference to a flowchart of Fig. 3.

Image information in which a display shelf displayed in a store is captured and image information in which elements constituting the display shelf, for example, a goods display area in which goods are displayed and a price tag area in which price tags are placed are set as annotations in the display shelf are input as annotation data to the information processing terminal 2.

The annotation data reception processing unit 201 in the learning processing unit 20 receives an input of the input annotation data (S100). As the annotation data, preferably, the number of inputs necessary for learning may be received.

Then, the network generation processing unit 202 generates a network (learning model) using the annotation data for which an input has been received by the annotation data reception processing unit 201 by using a known learning processing method of deep learning (S110).

By executing the above processing, a network (learning model) can be generated.

Next, detection processing will be described with reference to a flowchart of Fig. 4.

Image information for executing identification processing of goods displayed on a display shelf/reading processing of price tags is input to the information processing terminal 2 as image information to be processed. The image information to be processed is received by the image information reception processing unit 301 of the detection processing unit 21 (S200).

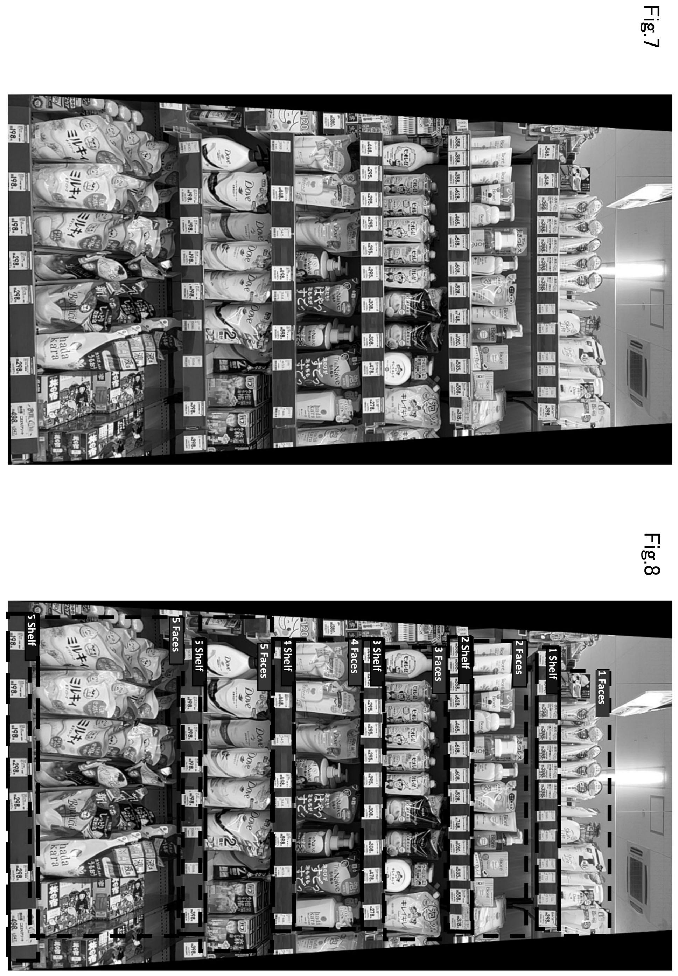

Then, the correct placement processing unit 302 executes correct placement processing on the image information to be processed for which an input has been received (S210). Fig. 7 illustrates an example of image information after execution of the correct placement processing.

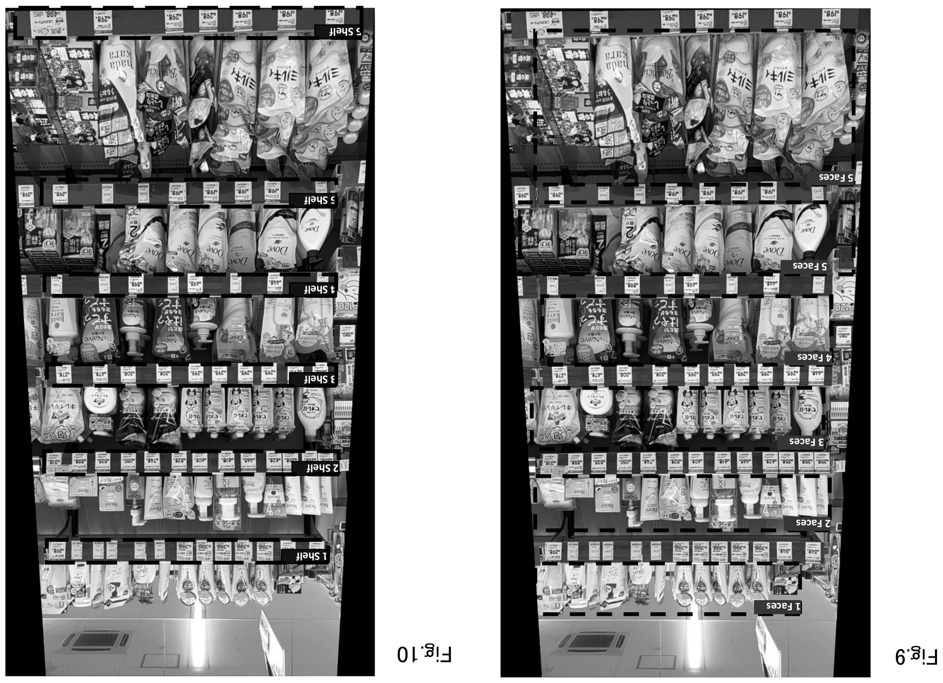

The image information to be processed that has been subjected to correct placement is input as input image information to the recognition processing unit 303, and recognition processing of elements constituting the display shelf such as a goods display area and a price tag area by deep learning is executed using the network (learning model) generated by the learning processing unit 20 (S220). Fig. 8 illustrates an example of the recognition result. In Fig. 8, the goods display area and the price tag area are displayed in one piece of image information, but the goods display area and the price tag area may be output to different pieces of image information. Fig. 9 illustrates that only the goods display area is output, and Fig. 10 illustrates that only the price tag area is output.

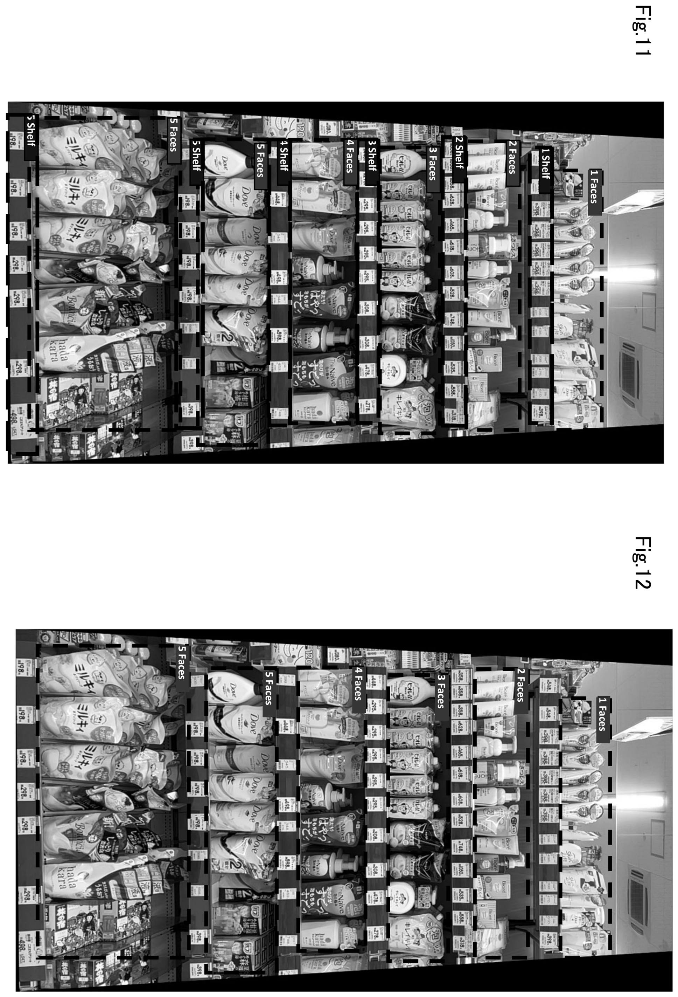

Then, correction processing is executed on the recognition result in the recognition processing unit 303 using the first correction processing, the second correction processing, and the like by the correction processing unit 304 (S230). For example, in the recognition result (Figs. 8 and 9) in S220, since the position of the left end of the area of the fifth area ("5 faces") from the top of the goods display area is shifted, the position of the left end is corrected using the first correction processing, the second correction processing, and the like. The results after the correction processing are illustrated in Figs. 11 and 12.

The output processing unit 305 outputs the result after the correction processing as described above as a detection result. That is, the results of Fig. 11 or Figs. 12 and 10 are output as detection results. Note that the output processing unit 305 may output position coordinates (coordinate information or coordinate information and length) of the goods display area and the price tag area, in addition to outputting as the image information.

With respect to the goods display area and the price tag area in the image information capturing the display shelf output by the output processing unit 305 as described above, the goods identification processing, the price tag, and the price reading processing are executed by a known method.

Example 2

In Example 1 described above, as the correct placement processing in the correct placement processing unit 302, a case has been described in which various known correct placement processing techniques capable of executing processing to achieve a facing position can be used, but a case can be described in which correct placement processing with a reduced processing load is implemented. Thus, even in the information processing terminal 2 having a low processing capability such as a smartphone, the correct placement processing can be executed with a reduced load.

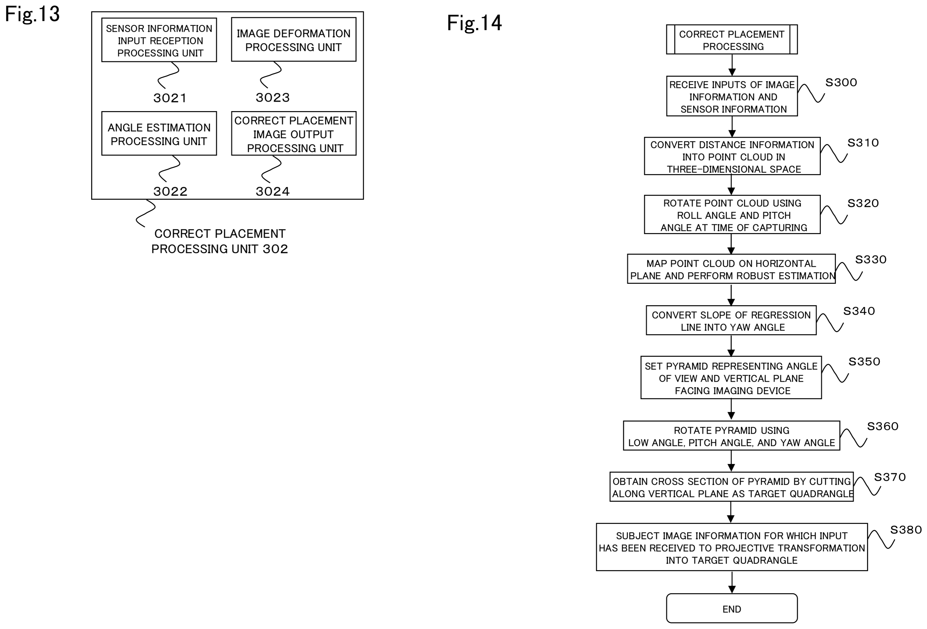

Fig. 13 illustrates an example of the configuration of the correct placement processing unit 302 in the present embodiment, and a flowchart of Fig. 14 illustrates an example of the correct placement processing in the correct placement processing unit 302. In addition, in a case where the correct placement processing of the present disclosure is performed, the information processing terminal 2 is a portable communication terminal such as a smartphone, and includes an imaging device (not illustrated) such as a camera and various sensor devices (not illustrated).

The imaging device only needs to be a device that captures image information with visible light or the like.

The sensor devices include, in addition to a sensor that detects an angle of view being captured by the imaging device, a sensor that detects a pitch angle and a roll angle of the information processing terminal 2 or the imaging device, a distance measuring sensor that measures a distance from the imaging device to the imaging target object, and the like, and may include a part or all of them.

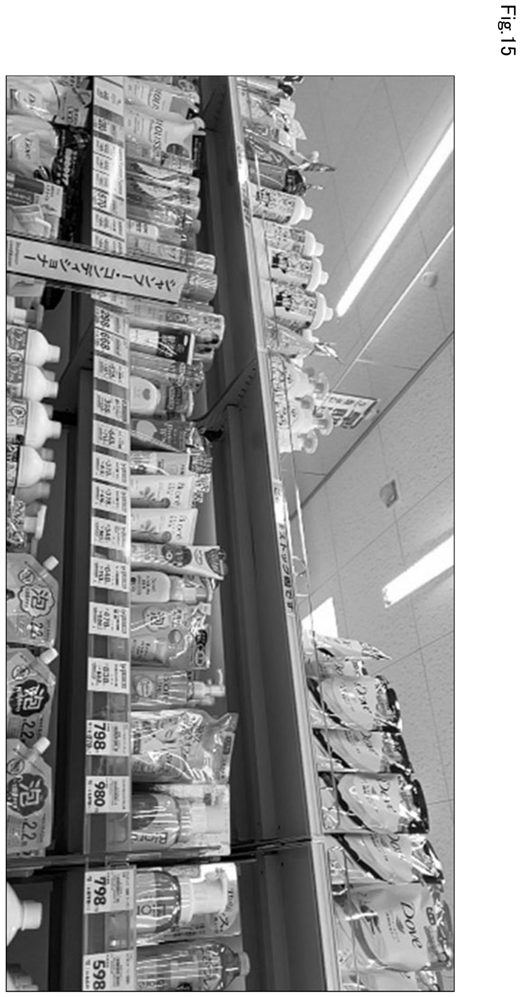

The correct placement processing unit 302 in the present embodiment regards the front surface of the imaging target object as a vertical rectangle (including a square) in the three-dimensional space (this surface is referred to as a target surface), and performs the correct placement processing by estimating the positional relationship between the information processing terminal 2 and the target surface in the three-dimensional space using sensor information detected by the sensor device of the information processing terminal 2. Fig. 15 illustrates an example of image information (image information before correction) captured by the imaging device.

The correct placement processing unit 302 includes a sensor information input reception processing unit 3021, an angle estimation processing unit 3022, an image deformation processing unit 3023, and a correct placement image output processing unit 3024.

The sensor information input reception processing unit 3021 receives, from the sensor devices, inputs of information of the pitch angle and the roll angle of the information processing terminal 2 or the imaging device from a sensor that detects the pitch angle and the roll angle. Furthermore, an input of distance information between the imaging device and the imaging target object is received from a sensor (distance measuring sensor) that measures the distance to the imaging target object. As the distance information, distance information from the imaging device to each point to the imaging target object is acquired.

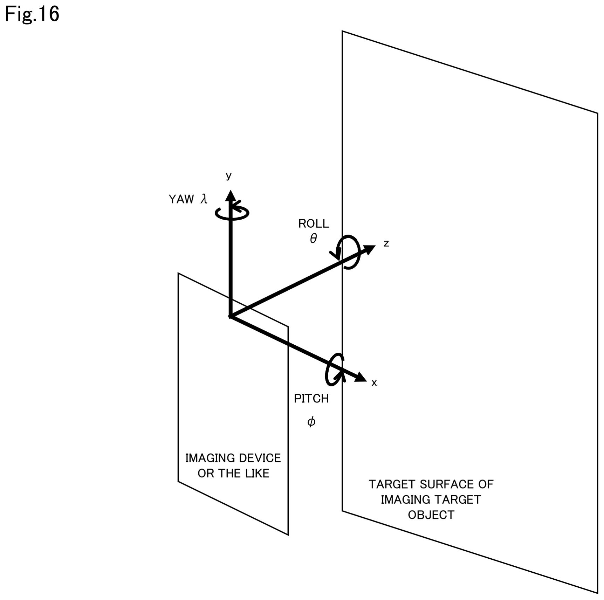

The angle estimation processing unit 3022 converts the distance information to each point of the imaging target object for which an input has been received by the sensor information input reception processing unit 3021 into three-dimensional information, and rotates the point cloud on the basis of the roll angle and the pitch angle. Since the target surface is perpendicular, the result of the rotation is a surface that is perpendicular to the xz plane, approximately as illustrated in Fig. 16. Then, by calculating a regression line on the xz plane of these point clouds, a perpendicular line drawn from the imaging device to the line is estimated as the yaw angle.

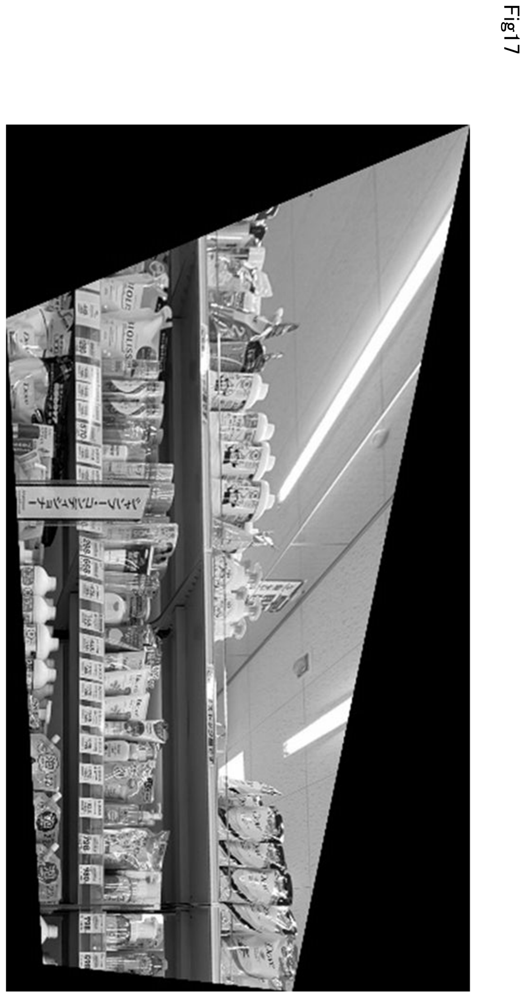

Using the yaw angle estimated by the angle estimation processing unit 3022, the image deformation processing unit 3023 deforms the image information captured by the imaging device so as to be at a position facing the imaging device. As the shape of a quadrangle of the target surface, four vectors representing the angle of view of the imaging device in the three-dimensional space and having the imaging device as an end point are assumed, and after rotating the four vectors on the basis of the roll angle and the pitch angle for which inputs have been received by the sensor information input reception processing unit 3021, it is only necessary to calculate four intersections with the vertical surface inclined to the left and right by the yaw angle estimated by the angle estimation processing unit 3022. Then, by performing projective transformation processing such as OpenCV on the image information captured by the imaging device using the calculated four intersections, the image deformation processing is performed, and the correct placement processing can be executed on the image information from the facing position. Fig. 17 illustrates an example of image information obtained by subjecting the image information of Fig. 15 to correct placement processing.

The correct placement image output processing unit 3024 outputs the image information deformed by the image deformation processing unit 3023. For example, the image information corrected as illustrated in Fig. 17 is output. Furthermore, the correct placement image output processing unit 3024 may output a parameter for performing correct placement, that is, a parameter for performing the projective transformation processing.

Next, the correct placement processing of the correct placement processing unit 302 in the present Example 2 will be described with reference to the flowchart of Fig. 14. In addition, a case where the information processing terminal 2 is a smartphone will be described.

First, the person in charge of capturing the display shelf of the store captures the display shelf (imaging target object) of the store using a camera of his or her smartphone. Image information captured by the camera of the smartphone is stored (S300). Fig. 15 illustrates an example of the image information. The image information in Fig. 15 is captured upward (elevation angle) from the obliquely downward direction of the display shelf, and is in a state of slightly rotating to the left side (the pitch angle is 18.8 degrees upward, and the roll angle is 4.6 degrees counterclockwise).

In addition, the sensor information input reception processing unit 3021 receives inputs of information of the pitch angle and the roll angle of the smartphone or the camera at the time of capturing the image information by the imaging device and information of the distance information to each point of the imaging target object measured by the sensor device (S300).

As the distance information, any number of pieces of distance information, for example, about several tens to hundreds of pieces of distance information may be acquired with respect to the imaging target object. Note that the number of places where the distance information is acquired may be any number as long as

The angle estimation processing unit 3022 plots the distance information received by the sensor information input reception processing unit 3021 in a three-dimensional space and converts the distance information into a point cloud in the three-dimensional space (S310). Then, the angle estimation processing unit 3022 rotates the point cloud using the information of the pitch angle and the roll angle for which inputs have been received by the sensor information input reception processing unit 3021 (S320).

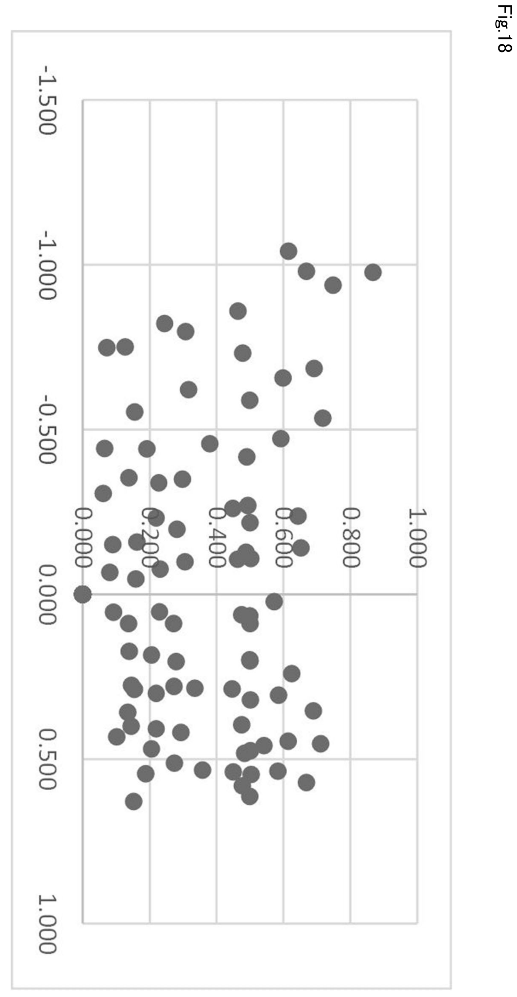

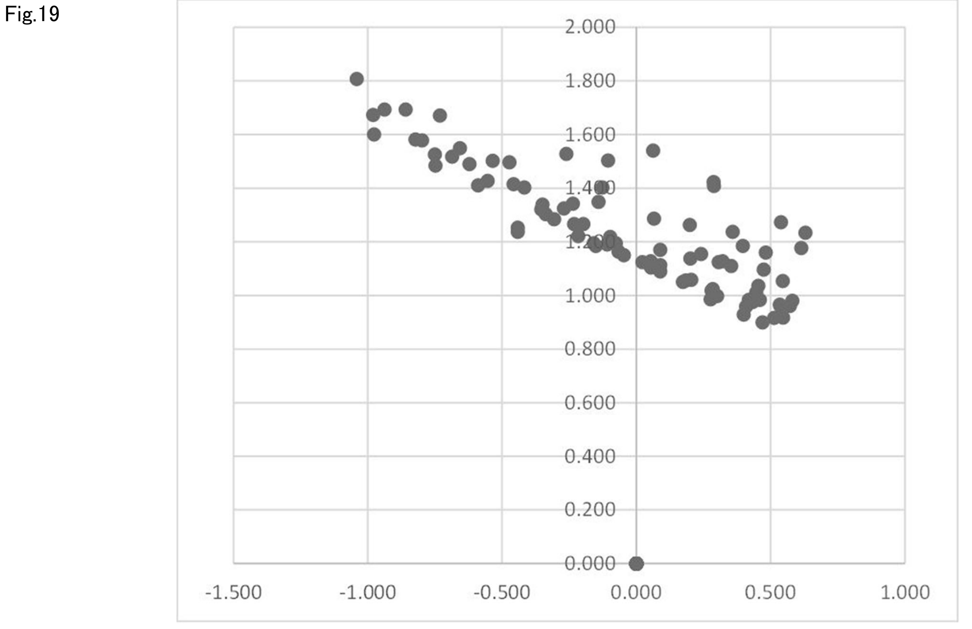

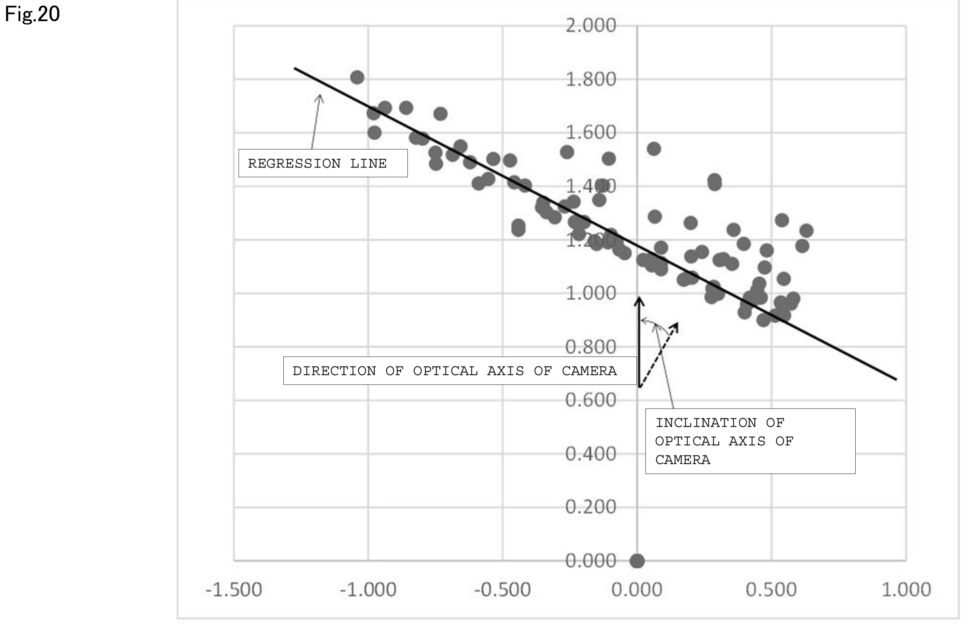

In order to generate correct placement image information (trapezoid correction image information) in which goods displayed on the display shelf on the target surface are upright and each shelf is horizontal, that is, in order to perform correct placement so that the target surface of the image information captured by the imaging device is at a position facing the camera, it is necessary to calculate how much the target surface is inclined from the direction facing the camera. Thus, the point cloud after the rotation in S320 is mapped on a horizontal plane (xz plane), and a regression line is calculated using RANSAC or the like which is an algorithm of robust estimation (S330). Fig. 18 is a front view (xy plane in Fig. 16) in a state where the point cloud after the rotation of S320 is mapped on the vertical plane, and Fig. 19 is a top view (xz plane in Fig. 16) in a state where the point cloud after the rotation of S320 is mapped on the horizontal plane. In addition, Fig. 20 schematically illustrates processing in the angle estimation processing unit 3022.

Then, an angle (yaw angle) indicating how much the target surface is inclined from the optical axis of the camera may be calculated from the regression line. Specifically, assuming that the slope of the regression line of the point cloud is a, the slope a of the regression line is converted into the yaw angle by calculating Expression 1 (S340). That is, the arc tangent is calculated using the slope a as an argument.

$$\text{(Expression 1)}$$

$$\text{Yaw angle} = \text{atan}(a)$$

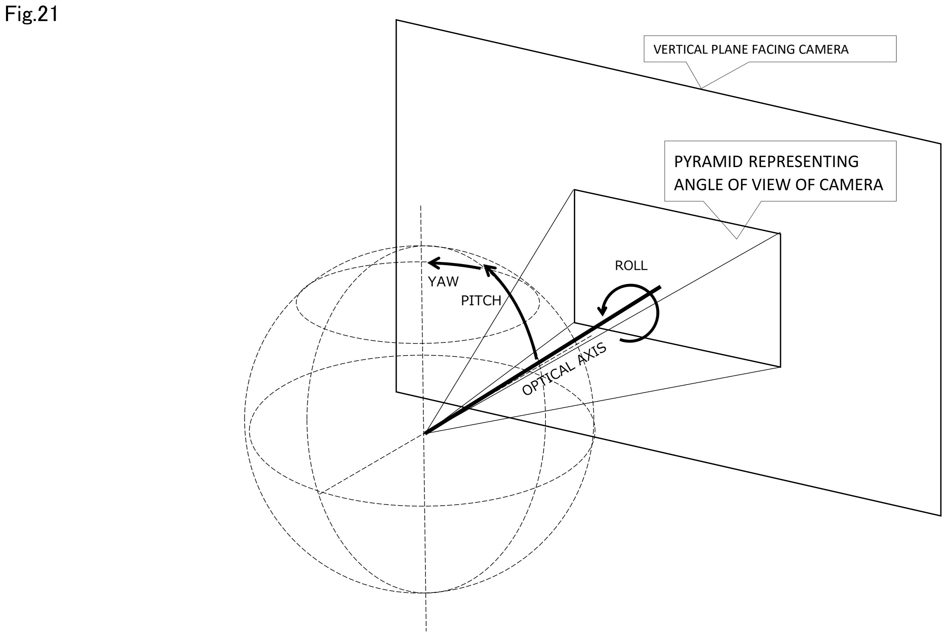

Since the angle estimation processing unit 3022 can estimate the yaw angle by the above processing, the image deformation processing unit 3023 deforms the image information captured by the imaging device using the estimated yaw angle so as to be at a position facing the imaging device. This processing is schematically illustrated in Fig. 21.

Since the yaw angle is estimated by the angle estimation processing unit 3022, the positional relationship between the camera and the target surface in the three-dimensional space is found, and thus the image deformation processing unit 3023 sets four straight lines (vectors) connecting four vertexes formed by the horizontal plane, the camera position, and the angle of view of the camera in the three-dimensional space (S350). Then, the four straight lines (vectors) are rotated using the low angle and the pitch angle for which inputs have been received by the sensor information input reception processing unit 3021 and the yaw angle estimated by the angle estimation processing unit 3022 (S360).

The image deformation processing unit 3023 calculates a quadrangle of a cross section obtained by cutting the four straight lines rotated in S360 along the target surface as a target quadrangle (S370). The image deformation processing unit 3023 subjects the image information captured by the imaging device to projective transformation with respect to the target quadrangle to generate correct placement image information (S380). Image information obtained by subjecting the image information of Fig. 15 to the correct placement processing in the correct placement processing unit 302 is the image information of Fig. 17.

By executing the above processing, the processing of the correct placement processing unit 302 can be executed.

Then, the correct placement image output processing unit 3024 outputs the image information deformed by the image deformation processing unit 3023. Furthermore, the correct placement image output processing unit 3024 may output a parameter for subjecting the target quadrangle to the projective transformation as a parameter used for correct placement. By outputting the parameter, the smartphone can perform processing of reproducing the correct placement processing using the image information before correct placement and the parameter in a predetermined server by transmitting the image information before correct placement and the parameter instead of the image information after correct placement, and the amount of data to be uploaded can be reduced.

In addition to the above-described process of the correct placement processing unit 302, the following process can also be performed.

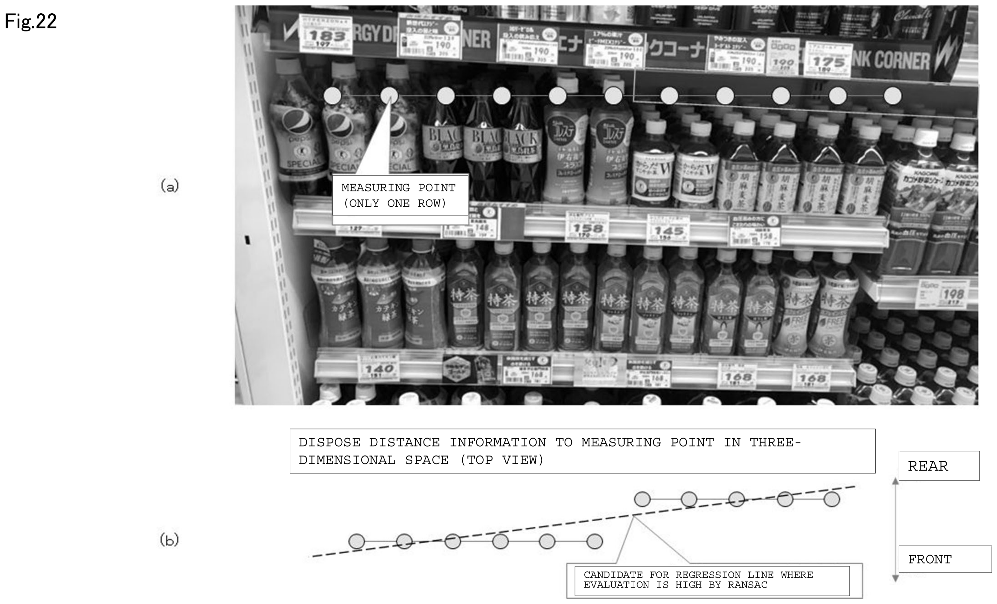

That is, in a case where the imaging target object has many irregularities like a display shelf on which goods are displayed, since the irregularities of the imaging target object have a quite strong correlation in the horizontal direction as compared with the vertical direction, when a left-right direction of the imaging device is slightly deviated from the horizontal direction of the display shelf, a "step-like difference" in which the distance information arranged side by side is close up to the middle, and then is far from the middle is likely to occur. If some of such columns are mixed in the acquired distance information, an estimation result inclined with respect to the original target surface is obtained. This is schematically illustrated in Fig. 22. Fig. 22(a) illustrates image information obtained by capturing a display shelf having many irregularities as an imaging target object, for example, a display shelf on which goods are displayed. Fig. 22(a) illustrates that the position (point) at which the distance information is acquired may be the position of goods located on the front side, the position of a shelf board on the back side without goods, or the like. In this case, the positional relationship of the point cloud as illustrated in Fig. 22(b) is obtained, and an inclined estimation result is likely to be obtained.

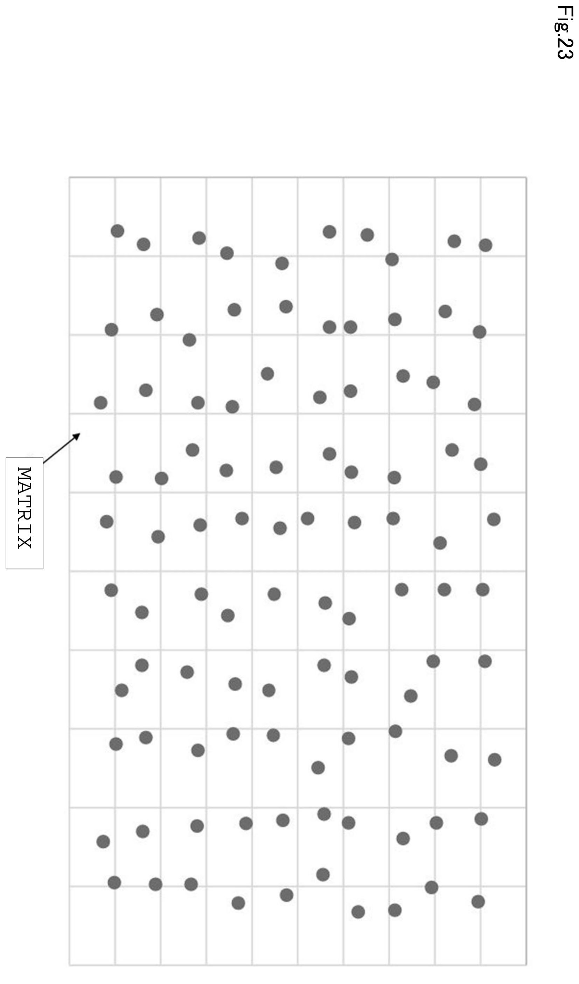

Thus, in the correct placement processing in the present Example 2, the target surface may be further divided into a matrix having a predetermined size, and distance information of points randomly dispersed in a pseudo manner in each matrix may be acquired. For example, by setting observation points (any one or more angles of upper, lower, left, and right) whose positions are shifted with randomness from the intersection of each matrix, measuring distances to the observation points along the observation points, and converting the measured distance information into a point cloud in a three-dimensional space along the set angle, it is possible to prevent the regularity of the shape of the imaging target object from causing deviation in the measured distance information, and to improve the accuracy of the estimation result. Thus, when the distance information is converted into the point cloud in the three-dimensional space in S310, the point cloud can be randomly selected from the matrix among the point clouds in which the distance information is plotted. This is schematically illustrated in Fig. 23.

With the above processing, the accuracy of the estimation result can be improved.

Furthermore, the correct placement processing unit 302 may perform the following treatment.

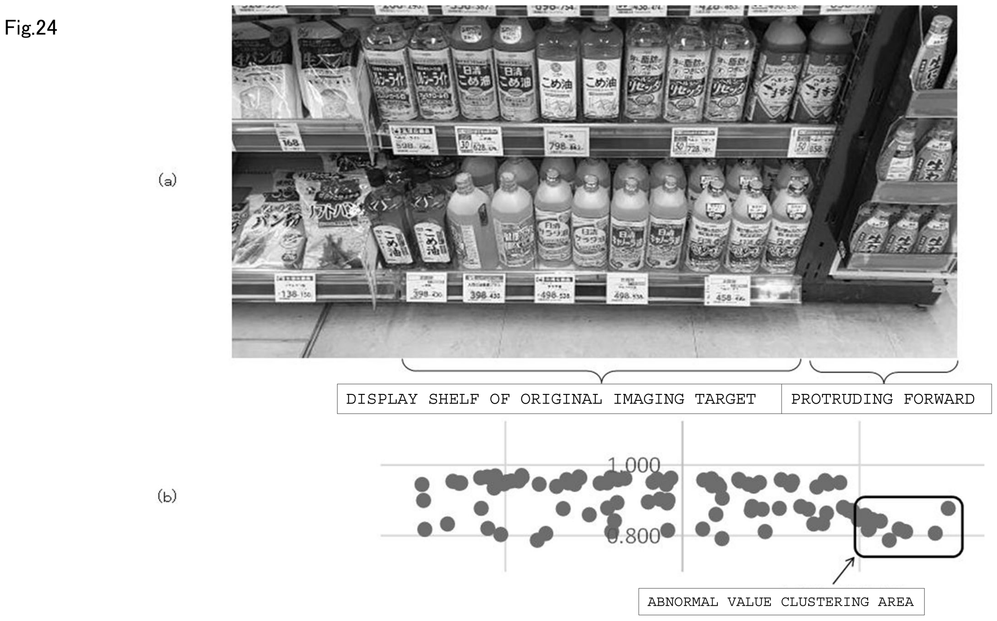

That is, in a case where the imaging target object is a display shelf, normally, the person in charge of capturing stands near the center of the display shelf to be captured, and performs capturing so that the entire right and left sides of the display shelf are captured. In that case, usually, there is a possibility that a part of the adjacent display shelf is reflected near the left and right ends of the captured image information. An example of the image information indicating this is illustrated in Fig. 24. In the case of such image information, in a case where the left and right display shelves protrude forward from the display shelf to be originally captured or are recessed backward, the regression line in S330 may be inclined. In a case where the captured image information is in Fig. 24(a), the display shelf reflected on the right side of the original display shelf to be captured protrudes forward. Thus, when the distance information is plotted in a three-dimensional space, an abnormal value occurs on the right side as illustrated in the top view (xz plane) of Fig. 24(b). When these point clouds are set as processing targets as they are, the slope of the regression line is affected.

Accordingly, when the regression line is calculated using processing such as RANSAC in the correct placement processing in the correct placement processing unit 302 of Example 2, the following processing may be executed.

First, using processing such as RANSAC, a predetermined number of points are randomly selected from the point cloud after rotation in S320, and a regression line is obtained. Then, for all the point clouds, the number of points at which the error from the regression line falls within a threshold is set as an evaluation function, and this operation is repeated a plurality of times, and the regression line having the largest score is selected as a final regression line. For example, in the case of obtaining a regression line from a point cloud of 100 points, sufficient accuracy can be obtained by obtaining a regression line in which three points are selected as a predetermined number of points and performing repetition 500 times.

Furthermore, regarding this evaluation function, in a case where a point on the outer edge portion is selected, it is possible to reduce the influence of irregularities of the display shelf reflected in the vicinity of the left and right ends by changing the weight to be lowered. As a method of changing the weighting, for example, there is a method of counting 0.5 points instead of 1 point in the outer edge portion.

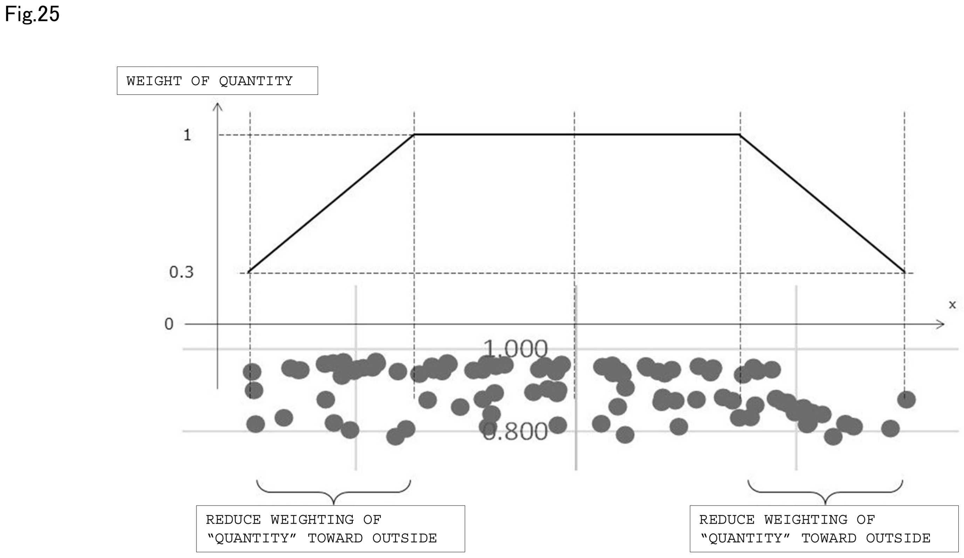

More specifically, for example, as illustrated in Fig. 25, the acquisition section of the point cloud is divided into a predetermined number, for example, four equal parts in the x-axis direction, and the weighting of the number of points is changed as the outer section is positioned at the outer edge portion.

The correct placement processing in the correct placement processing unit 302 in Example 2 can be similarly applied to not only image information captured at the elevation angle or the depression angle but also image information captured from the left-right direction and the like.

In Example 1 and Example 2, the order of processing can be arbitrarily changed. In addition, processing can be added or deleted to an extent that the gist of the present disclosure is not changed. Furthermore, since the information processing system 1 of the present disclosure according to Example 2 can execute the correct placement processing with a small processing load, the information processing terminal 2 can be applied to a smartphone, a tablet computer, or the like that does not have a high processing capability, but it goes without saying that the information processing terminal 2 may be executed by a computer, a server, or the like having a high processing capability.

Industrial Applicability

By using an information processing system 1 of the present disclosure, it is possible to detect an area of a display shelf to be processed when processing of identifying goods displayed on the display shelf/reading price tags.

Reference Signs List

1        Information processing system
2        Information processing terminal
20       Learning processing unit
21       Detection processing unit
70       Calculation device
71       Storage device
72       Display device
73       Input device
74       Communication device
201      Annotation data reception processing unit
202      Network generation processing unit
301      Image information reception processing unit
302      Correct placement processing unit
303      Recognition processing unit
304      Correction processing unit
305      Output processing unit
3021     Sensor information input reception processing unit
3022     Angle estimation processing unit
3023     Image deformation processing unit
3024     Correct placement image output processing unit

**Claims**

1. An information processing system for image information for capturing a display shelf,
   the information processing system comprising:

   a learning processing unit that generates a network of machine learning; and
   a detection processing unit that performs processing of detecting a predetermined area from the image information using the network,
   the learning processing unit comprising:

   an annotation data reception processing unit that receives an input of annotation data obtained by annotating a goods display area and/or a price tag area in the display shelf; and
   a learning processing unit that performs learning processing using the received annotation data and generates a network of machine learning, and
   the detection processing unit comprising:

   an image information reception processing unit that receives an input of image information in which a display shelf to be processed is captured; and
   a recognition processing unit that recognizes the goods display area and/or the price tag area in the display shelf captured in the image information using the generated network.

2. The information processing system according to claim 1, wherein

   the detection processing unit includes
   a correction processing unit that executes correction processing of correcting a position of an end of the recognized goods display area and/or price tag area in a case where the position of the end is shifted.

3. The information processing system according to claim 2, wherein

   the correction processing unit detects
   an abnormal value at an end of the detected goods display area and/or price tag area, and changes an area having the abnormal value to a normally recognized position of the end.

4. The information processing system according to claim 3, wherein

   the correction processing unit
   determines a position of an end of the detected goods display area and/or price tag area, and determines an end shifted by a predetermined magnitude or a predetermined ratio or more from an average value or a median value of the positions as an abnormal value.

5. The information processing system according to claim 2, wherein

   the correction processing unit
   detects an object near an end of the display shelf, and
   determines an end of the detected goods display area and/or the price tag area as a position of the detected object.

6. The information processing system according to claim 1, wherein

   the detection processing unit includes
   a correct placement processing unit that executes correct placement processing of deforming the image information in which the display shelf to be processed is captured and for which an input has been received is captured so as to be in a facing position, and
   the recognition processing unit recognizes
   an area to be processed by using the generated network, with image information after execution of the correct placement processing as input image information.

7. The information processing system according to claim 6, wherein
   the correct placement processing unit includes:

a sensor information input reception processing unit that receives an input of information of a pitch angle and a roll angle of an imaging device or an information processing terminal that has captured the display shelf and distance information obtained by measuring a distance to an imaging target object; and
an image deformation processing unit that performs image deformation processing on the image information, and
the image deformation processing unit
calculates a regression line of a point cloud including a plurality of the points by using the distance information and the information of the pitch angle and the roll angle, estimates information of a yaw angle of the imaging device or the information processing terminal, and deforms the image information to be a position facing the imaging device by using the estimated information of the yaw angle.

8. The information processing system according to claim 7, wherein

the image deformation processing unit converts distance information to an arbitrary point in the imaging target object into three-dimensional information, rotates the point cloud including the points on a basis of information of a pitch angle and a roll angle, and estimates the information of the yaw angle by calculating a regression line of a point cloud when the point cloud including the points is projected on a horizontal plane.

9. An information processing system for image information for capturing a display shelf, the information processing system comprising:

an image information reception processing unit that receives an input of image information in which a display shelf to be processed is captured; and
a recognition processing unit that recognizes a goods display area and/or a price tag area in the display shelf captured in the image information using a network of machine learning generated using annotation data obtained by annotating the goods display area and/or the price tag area captured in the display shelf.

10. An information processing program causing a computer to function as:

a learning processing unit that generates a network of machine learning; and
a detection processing unit that performs processing of detecting a predetermined area from image information using the network, wherein the learning processing unit causes the computer to function as:

an annotation data reception processing unit that receives an input of annotation data obtained by annotating a goods display area and/or a price tag area in a display shelf; and
a learning processing unit that performs learning processing using the received annotation data and generates a network of machine learning, and
the detection processing unit causes the computer to function as:

an image information reception processing unit that receives an input of image information in which a display shelf to be processed is captured; and
a recognition processing unit that recognizes the goods display area and/or the price tag area in the display shelf captured in the image information using the generated network.

11. An information processing program causing a computer to function as:

an image information reception processing unit that receives an input of image information in which a display shelf to be processed is captured; and
a recognition processing unit that recognizes a goods display area and/or a price tag area in the display shelf captured in the image information using a network of machine learning generated using annotation data obtained by annotating the goods display area and/or the price tag area captured in the display shelf.

Fig.1

| ANNOTATION DATA RECEPTION PROCESSING UNIT |
| 201 |

| NETWORK GENERATION PROCESSING UNIT |
| 202 |

LEARNING PROCESSING UNIT 20

| IMAGE INFORMATION RECEPTION PROCESSING UNIT |
| 301 |

| RECOGNITION PROCESSING UNIT |
| 303 |

| OUTPUT PROCESSING UNIT |
| 305 |

| CORRECT PLACEMENT PROCESSING UNIT |
| 302 |

| CORRECTION PROCESSING UNIT |
| 304 |

DETECTION PROCESSING UNIT 30

INFORMATION PROCESSING TERMINAL 2

INFORMATION PROCESSING SYSTEM 1

Fig.2

CALCULATION DEVICE  70

STORAGE DEVICE  71

DISPLAY DEVICE  72

INPUT DEVICE  73

COMMUNICATION DEVICE  74

Fig.3

LEARNING PROCESSING

RECEIVE INPUT OF ANNOTATION DATA  S100

PROCESSING OF GENERATING NETWORK  S110

END

Fig.4

DETECTION PROCESSING

RECEIVE INPUT OF IMAGE INFORMATION TO BE PROCESSED  S200

CORRECT PLACEMENT PROCESSING  S210

RECOGNITION PROCESSING  S220

CORRECTION PROCESSING  S230

OUTPUT  S240

END

14

Fig.5

PILLAR MEMBER

Fig.6

BREAK IN DISPLAY SHELF

BREAK IN DISPLAY SHELF

Fig.7

Fig.8

Fig.9

Fig.10

EP 4 715 733 A1

Fig.11

Fig.12

19

Fig.13

| SENSOR INFORMATION INPUT RECEPTION PROCESSING UNIT | IMAGE DEFORMATION PROCESSING UNIT |
|---|---|

3021     3023

| ANGLE ESTIMATION PROCESSING UNIT | CORRECT PLACEMENT IMAGE OUTPUT PROCESSING UNIT |
|---|---|

3022     3024

CORRECT PLACEMENT
PROCESSING UNIT 302

Fig.14

CORRECT PLACEMENT
PROCESSING

RECEIVE INPUTS OF IMAGE
INFORMATION AND
SENSOR INFORMATION   S300

CONVERT DISTANCE INFORMATION
INTO POINT CLOUD IN
THREE-DIMENSIONAL SPACE   S310

ROTATE POINT CLOUD USING
ROLL ANGLE AND PITCH
ANGLE AT TIME OF CAPTURING   S320

MAP POINT CLOUD ON HORIZONTAL
PLANE AND PERFORM ROBUST ESTIMATION   S330

CONVERT SLOPE OF REGRESSION
LINE INTO YAW ANGLE   S340

SET PYRAMID REPRESENTING ANGLE
OF VIEW AND VERTICAL PLANE
FACING IMAGING DEVICE   S350

ROTATE PYRAMID USING
LOW ANGLE, PITCH ANGLE, AND YAW ANGLE   S360

OBTAIN CROSS SECTION OF PYRAMID BY CUTTING
ALONG VERTICAL PLANE AS TARGET QUADRANGLE   S370

SUBJECT IMAGE INFORMATION FOR WHICH INPUT
HAS BEEN RECEIVED TO PROJECTIVE TRANSFORMATION
INTO TARGET QUADRANGLE   S380

END

Fig.15

Fig.16

Fig17

Fig.18

EP 4 715 733 A1

EP 4 715 733 A1

Fig.19

Fig.20

27

ROLL

OPTICAL AXIS

PITCH

YAW

PYRAMID REPRESENTING
ANGLE OF VIEW OF CAMERA

VERTICAL PLANE FACING CAMERA

Fig.21

Fig.22

(a)

(b)

MEASURING POINT
(ONLY ONE ROW)

DISPOSE DISTANCE INFORMATION TO MEASURING POINT IN THREE-
DIMENSIONAL SPACE (TOP VIEW)

CANDIDATE FOR REGRESSION LINE WHERE
EVALUATION IS HIGH BY RANSAC

REAR

FRONT

Fig.23

MATRIX

Fig.24

(a)

(b)

DISPLAY SHELF OF ORIGINAL IMAGING TARGET

PROTRUDING FORWARD

ABNORMAL VALUE CLUSTERING AREA

1.000

0.800

Fig.25

WEIGHT OF QUANTITY

REDUCE WEIGHTING OF
"QUANTITY" TOWARD OUTSIDE

REDUCE WEIGHTING OF
"QUANTITY" TOWARD OUTSIDE

0.800

1.000

0.3

1

0

x

## INTERNATIONAL SEARCH REPORT

| | International application No. |
|---|---|
| | **PCT/JP2024/008612** |

| A. | CLASSIFICATION OF SUBJECT MATTER |
|---|---|

*G06T 7/00*(2017.01)i; *G06Q 30/06*(2023.01)i
FI: G06T7/00 350C; G06Q30/06

According to International Patent Classification (IPC) or to both national classification and IPC

| B. | FIELDS SEARCHED |
|---|---|

Minimum documentation searched (classification system followed by classification symbols)

G06T7/00; G06Q30/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2015-210651 A (SUNTORY SYSTEM TECHNOLOGY LTD.) 24 November 2015 (2015-11-24) | 1-2, 5-6, 9-11 |
| | paragraphs [0028], [0037]-[0052], fig. 5-8 | |
| A | | 3-4, 7-8 |
| X | WO 2019/088223 A1 (NTT DOCOMO, INC.) 09 May 2019 (2019-05-09) | 1-2, 9-11 |
| | paragraphs [0016], [0017], [0059]-[0068], fig. 2, 7, 8 | |
| A | | 3-8 |
| X | JP 2021-184125 A (MARKETVISION CO., LTD.) 02 December 2021 (2021-12-02) | 1, 6, 9-11 |
| | paragraphs [0064]-[0070] | |
| A | | 2-5, 7-8 |
| A | JP 2019-185684 A (MARKETVISION CO., LTD.) 24 October 2019 (2019-10-24) | 1-11 |
| | entire text, all drawings | |

☑ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 715 733 A1**

INTERNATIONAL SEARCH REPORT

### C. DOCUMENTS CONSIDERED TO BE RELEVANT

| Category* | Citation of document, with indication, where appropriate, of the relevant passages | Relevant to claim No. |
|---|---|---|
| A | JP 2021-047747 A (CANON MARKETING JAPAN INC.) 25 March 2021 (2021-03-25)<br>entire text, all drawings | 1-11 |
| A | JP 2020-119283 A (RECRUIT CO., LTD.) 06 August 2020 (2020-08-06)<br>entire text, all drawings | 1-11 |
| A | WO 2018/186398 A1 (NEC CORPORATION) 11 October 2018 (2018-10-11)<br>entire text, all drawings | 1-11 |
| A | WO 2019/087519 A1 (PANASONIC INTELLECTUAL PROPERTY MANAGEMENT CO., LTD.) 09 May 2019 (2019-05-09)<br>entire text, all drawings | 1-11 |

Form PCT/ISA/210 (second sheet) (July 2022)

**INTERNATIONAL SEARCH REPORT**
Information on patent family members

International application No.

**PCT/JP2024/008612**

| Patent document cited in search report | | | Publication date (day/month/year) | Patent family member(s) | | | Publication date (day/month/year) |
|---|---|---|---|---|---|---|---|
| JP | 2015-210651 | A | 24 November 2015 | (Family: none) | | | |
| WO | 2019/088223 | A1 | 09 May 2019 | (Family: none) | | | |
| JP | 2021-184125 | A | 02 December 2021 | JP | 6936529 | B1 | |
| JP | 2019-185684 | A | 24 October 2019 | (Family: none) | | | |
| JP | 2021-047747 | A | 25 March 2021 | (Family: none) | | | |
| JP | 2020-119283 | A | 06 August 2020 | (Family: none) | | | |
| WO | 2018/186398 | A1 | 11 October 2018 | US 2020/0012893 A1 entire text, all drawings JP 2021-093189 A | | | |
| WO | 2019/087519 | A1 | 09 May 2019 | US 2020/0334620 A1 entire text, all drawings EP 3706056 A1 CN 111295684 A | | | |

Form PCT/ISA/210 (patent family annex) (July 2022)

**REFERENCES CITED IN THE DESCRIPTION**

**Patent documents cited in the description**

- WO 2023083471 A
- JP 5334409 A
- JP 5342230 A